# EUROPÄISCHE PATENTSCHRIFT

(11) **EP 3 292 988 B1**
(45) Veröffentlichungstag und Bekanntmachung des Hinweises auf die Patenterteilung: **13.01.2021**
(21) Anmeldenummer: 17189121.1
(22) Anmeldetag: 01.09.2017
(51) Int. Cl.: B29C 64/245

(54) **WECHSELPLATTFORMTRÄGER MIT VERBESSERTER TEMPERIERUNG**
INTERCHANGEABLE PLATFORM SUPPORT WITH IMPROVED TEMPERATURE CONTROL
SUPPORT PORTEUR DE PLATEFORME INTERCHANGEABLE AVEC UN CONTRÔLE DE TEMPERATURE AMÉLIORÉ

(30) Priorität: 08.09.2016 DE 102016217129
(43) Veröffentlichungstag der Anmeldung: 14.03.2018
(73) Patentinhaber: EOS GmbH Electro Optical Systems, 82152 Krailling (DE)
(72) Erfinder: MAYER, Siegfried, 83059 Kolbermoor (DE); MAIER, Horst, 82152 Planegg (DE)
(74) Vertreter: Prüfer & Partner mbB Patentanwälte · Rechtsanwälte

(56) Entgegenhaltungen:
- DE-A1- 10 342 880
- DE-A1-102013 001 374
- DE-U1- 29 624 498

## Beschreibung

Die Erfindung betrifft einen Wechselplattformträger für eine generative Schichtbauvorrichtung und eine generative Schichtbauvorrichtung, in der dieser angebracht ist.

Bei generativen Schichtbauvorrichtungen, mittels derer Objekte durch Verfestigen eines formlosen Aufbaumaterials Schicht für Schicht auf einem Objektträger hergestellt werden, wird in der Regel das Objekt nicht direkt auf dem Träger, sondern auf einer auf dem Träger angeordneten Bauunterlage hergestellt. Dies hat den Vorteil, dass nach Fertigstellung des Objekts dieses zusammen mit der Unterlage dem Baubehälter entnommen werden kann und außerhalb der Schichtbauvorrichtung von der Unterlage getrennt werden kann. Damit insbesondere während des Auftrags einer Schicht des Aufbaumaterials es nicht zu einem Verrutschen des Objekts auf dem Träger kommt, wird einerseits die Bauunterlage fest mit dem Träger verschraubt und andererseits für die Bauunterlage ein Material gewählt, auf dem die unterste verfestigte Schicht des Objekts gut haftet.

Insbesondere bei generativen Schichtbauverfahren, in denen das Aufbaumaterial durch Wärmezufuhr an selektiven Stellen verfestigt wird, findet oftmals eine Vorheizung des Aufbaumaterials bis zu einer (Arbeits-)Temperatur statt, welche beispielsweise geringfügig unterhalb der Temperatur liegt (aber auch darunter liegen kann), bei der sich die Partikel des normalerweise pulverförmigen Aufbaumaterials miteinander verbinden, d. h. zumindest oberflächlich *schmelzen. Um einen Verzug des hergestellten Objekts infolge von thermischen Spannungen* zu vermeiden, schlägt DE 101 08 612 C1 dabei vor, die Temperaturverteilung in dem innerhalb des Baubehälters vorhandenen Pulverkuchen durch eine Beheizung der Wände des Baubehälters und insbesondere eine Beheizung der Bauunterlage einzustellen.

DE 103 42 880 A1 widmet sich dem Problem, dass beim Beheizen einer auf dem Träger angeordneten Bauunterlage, beispielsweise einer Bauplattform bzw. Substratplatte, letztere sich infolge von Temperaturgradienten über die Substratplatte hinweg krümmen kann, so dass der Wärmeübergang vom beheizten Träger zur Substratplatte vermindert ist. Das Problem tritt insbesondere dann auf, wenn die Substratplatte nicht mit dem Träger fest verschraubt ist, wie dies in der DE 296 24 498 U1 über die Verschraubung einer aus einer stabilen Platte gebildete Unterlage mit einem Kühlkanäle aufweisenden Objektträger vorgesehen ist, sondern für eine automatische Auswechselbarkeit mit dem Träger lediglich verrastet ist. Zur Lösung des Problems schlägt DE 103 42 880 A1 vor, Ausnehmungen in der Substratplatte anzubringen, durch welche die thermische Verformung der Substratplatte verringert wird. Damit werden geringere Haltekräfte benötigt, um die Substratplatte auf dem Träger zu halten.

Die DE 10 2013 001 374 A1 offenbart eine Tragevorrichtung zum Tragen eines Objektes, wobei auf dem Träger der Tragevorrichtung eine Bauplatte angeordnet ist, die mittels einer Heizvorrichtung aufheizbar ist, wobei die Heizvorrichtung einen plattenartig ausgebildeten Träger umfasst, der an seiner der Bauplatte zugewandten Oberseite mit einer Ausnehmung versehen ist, in welcher ein Heizelement schwimmend gelagert ist.

Die Erfinder der vorliegenden Anmeldung haben festgestellt, dass bei der Verwendung eines Spannsystems zum Halten einer Substratplatte bei gleichzeitiger Beheizung der Substratplatte über den Träger stets Luftspalte zwischen Substratplatte und Träger vorhanden sind. Die Ursache hierfür ist, dass ein Spannsystem für eine präzise Festlegung des Orts der Substratplatte auf dem Träger starr ausgelegt ist und daher durch geringfügige Verformungen entstehende Spalte zwischen Substratplatte und Träger nicht verhindern kann. Luftspalte zwischen der Substratplatte und dem Träger führen allerdings dazu, dass der Wärmeübergang von dem temperierten Träger zur Substratplatte beeinträchtigt wird, was unerwünscht ist.

Es ist daher eine Aufgabe der vorliegenden Erfindung, bei einer leicht zu wechselnden Bauunterlage (Bauplattform oder Substratplatte) in einer generativen Schichtbauvorrichtung gleichzeitig für eine präzise Anordbarkeit der Bauunterlage auf dem Träger und einen guten Wärmeübergang zwischen Träger und Bauunterlage zu sorgen.

Die Aufgabe wird gelöst durch einen Wechselplattformträger nach Anspruch 1 und eine generative Schichtbauvorrichtung nach Anspruch 15. Weiterbildungen der Erfindung sind in den Unteransprüchen angegeben.

Ein erfindungsgemäßer Wechselplattformträger für eine generative Schichtbauvorrichtung, die ausgelegt ist zum Herstellen mindestens eines dreidimensionalen Objekts durch schichtweises Verfestigen eines pulverförmigen Aufbaumaterials an den dem mindestens einen Objekt entsprechenden Stellen in den jeweiligen Schichten auf einer Wechselpiattform, weist auf:
eine Spannvorrichtung zum lösbaren Festlegen einer Position der Wechselplattform bezüglich der Position des Wechselplattformträgers;
ein Temperiersystem, das ausgelegt ist, zumindest einem Teil seiner Umgebung Wärmeenergie zuzuführen und/oder von zumindest einem Teil seiner Umgebung Wärmeenergie abzuführen;
eine Andruckvorrichtung, die geeignet ist, zumindest einen Teil des Temperiersystems gegen eine Wechselplattform zu drücken, wenn diese in der Spannvorrichtung eingespannt ist.

Erfindungsgemäß muss die Spannvorrichtung, die eine vordefinierte Position einer Wechselplattform auf dem Wechselplattformträger möglichst genau festlegt, nicht auch noch gleichzeitig für einen guten Wärmeübergang zwischen Wechselplattformträger und Wechselplattform sorgen. Vielmehr weist der Wechselplattformträger eine Andruckvorrichtung auf, welche unabhängig von der Spannvorrichtung das Temperiersystem gegen die Wechselplattform drückt und somit für einen guten Wärmeübergang sorgt. Durch die erfindungsgemäße funktionale Trennung wird die Genauigkeit, mit der die Spannvorrichtung die Position der Wechselplattform festlegt, nicht durch die Funktion des Sicherstellens eines guten Wärmeübergangs beeinträchtigt. Natürlich ist ein Zusammenwirken von Spannvorrichtung und Andruckvorrichtung möglich, jedoch sorgt erfindungsgemäß die Andruckvorrichtung und nicht die Spannvorrichtung für ein Andrücken des Temperiersystems gegen die Wechselplattform, insbesondere senkrecht zur zum Wechselplattformträger weisenden Oberfläche der Wechselplattform.

Insbesondere wird erfindungsgemäß nicht notwendigerweise der gesamte Wechselplattformträger gegen die Wechselplattform gedrückt, sondern nur zumindest ein Teil des Temperiersystems, bevorzugt jener Teil, dessen Oberfläche zur Wechselplattform weist, wenn diese eingespannt ist. Es sei weiterhin betont, dass es sich bei dem Temperiersystem nicht nur um eine Heizvorrichtung handeln kann, die ausgelegt ist, einem Teil ihrer Umgebung Wärme zuzuführen, sondern die Erfindung ebenfalls in Zusammenhang mit einer Kühlvorrichtung oder Heiz-/Kühlvorrichtung anwendbar ist, die ausgelegt ist, von zumindest einem Teil ihrer Umgebung Wärmeenergie abzuführen.

Bevorzugt weist das Temperiersystem eine Anzahl von Temperiereinheiten auf, von denen jede geeignet ist, zumindest einem Teil ihrer Umgebung Wärmeenergie zuzuführen und/oder von zumindest einem Teil ihrer Umgebung Wärmeenergie abzuführen. Damit können die einzelnen Temperiereinheiten an unterschiedlichen Stellen angebracht sein, um beispielsweise unterschiedliche Bereiche einer Wechselplattform unterschiedlich zu beheizen und/oder zu kühlen. Auch eine zeitliche Abfolge von Heizung und Kühlung, etwa im Wechsel oder mit Unterbrechungen, ist möglich, wobei dies auch mit einer einzigen Temperiereinheit (aber auch mit mehreren Temperiereinheiten) realisiert werden kann, die dann im sogenannten Variotherm-Verfahren betrieben werden kann (bzw. können). Die Erfindung umfasst hier alle Ausführungen, bei denen zumindest eine der Temperiereinheiten gegen die Wechselplattform gedrückt wird

Weiter bevorzugt ist die Spannvorrichtung geeignet, in einer Ebene parallel zu den Schichten auf der Wechselplattform eine Stellenposition einer vorgegebenen Stelle in der Wechselplattform in Übereinstimmung zu bringen mit einer Trägerposition einer vorgegebenen Stelle in dem Wechselplattformträger mit einer Positionsunsicherheit, die in einer Richtung in der Ebene kleiner/gleich 30, bevorzugt kleiner/gleich 25, besonders bevorzugt kleiner/gleich 20 µm ist.

Gerade wenn die Position einer Wechselplattform relativ zum Wechselplattformträger mit hoher Präzision festgelegt werden soll, ist die vorliegende Erfindung von Vorteil. Insbesondere ist eine Anwendung der Erfindung im Zusammenhang mit Referenzspannsystemen möglich, bei denen auf der Wechselplattform ein Referenzpunkt definiert ist, der nicht nur bei der Herstellung eines Objekts in der generativen Schichtbauvorrichtung als Referenzpunkt dient, sondern auch in weiteren Bearbeitungsvorrichtungen, beispielsweise einer Fräsvorrichtung, in der die generativ hergestellten Objekte nachbehandelt werden, als Referenzpunkt dient. In solchen Referenzspannsystemen ist eine möglichst spielfreie Anordbarkeit einer Plattform relativ zur jeweiligen Vorrichtung von großer Wichtigkeit. Mit Positionsunsicherheit in einer Richtung parallel zu den Schichten auf der Wechselplattform ist dabei die Größe der Abweichung einer Ist-Position von einer Soll-Position in der vorgegebenen Richtung gemeint. Ob man hierfür das statistische Mittel aller Abweichungen oder den maximal auftretenden Wert der Abweichung zur Beurteilung heranzieht, ist für die vorliegende Erfindung nicht von Belang. Beides wäre möglich.

Auch wenn es möglich ist, die Spannvorrichtung und die Andruckvorrichtung durch voneinander getrennte Vorgänge zu betätigen, sind die Spannvorrichtung und die Andruckvorrichtung bevorzugt so ausgelegt, dass beim Einspannen einer Wechselplattform zumindest ein Teil des Temperiersystems durch die Andruckvorrichtung gegen die Wechselplattform gedrückt wird. Damit ist trotz der Trennung der Funktionen von Spannvorrichtung und Andruckvorrichtung eine einfache Auswechselbarkeit einer Wechselplattform gegeben.

In einer besonderen Ausführung ist die Andruckvorrichtung Bestandteil des Temperiersystems. Dadurch wird der Aufbau vereinfacht, beispielsweise könnte das Temperiersystem bzw. der Teil desselben, der gegen die Wechselplattform gedrückt wird, zumindest teilweise eine elastische, bevorzugt gut wärmeleitende, Umhüllung aufweisen.

Für die Realisierung der Andruckvorrichtung sind verschiedene Gestaltungsmöglichkeiten möglich. Vorzugsweise handelt es sich jedoch bei der Andruckvorrichtung um ein elastisches Element, beispielsweise eine oder mehrere Federn oder Elemente aus einem Elastomermaterial, welche bevorzugt so angebracht sind, dass sie zumindest einen Teil des Temperiersystems senkrecht zur zum Wechselplattformträger weisenden Oberfläche der Wechselplattform gegen die Wechselplattform drücken, wenn letztere in der Spannvorrichtung eingespannt ist. Damit kann die Andruckfunktion auf besonders einfache Weise realisiert werden.

Vorzugsweise ist dabei die Spannvorrichtung geeignet, eine Verbindung zwischen einer Wechselplattform und dem Wechselplattformträger dergestalt zu schaffen, dass im verbundenen Zustand das elastische Element komprimiert ist. Beispielsweise ist die Spannvorrichtung so ausgelegt, dass zum Verbinden einer Wechselplattform mit dem Wechselplattformträger das elastische Element komprimiert werden muss, so dass im Befestigungszustand dann das elastische Element (z.B. eine oder mehrere Federn) zumindest einen Teil des Temperiersystems senkrecht zur zum Wechselplattformträger weisenden Oberfläche der Wechselplattform gegen die Wechselplattform drückt.

Die Andruckfunktion kann alternativ oder zusätzlich zur Verwendung eines elastischen Elements auch dadurch realisiert werden, dass es sich bei der Andruckvorrichtung um eine pneumatisch, hydraulisch, elektromagnetisch oder piezoelektrisch betätigte Vorrichtung handelt. Dies hat den besonderen Vorteil, dass die Andruckfunktion dann besonders einfach automatisch gesteuert werden kann.

Bevorzugt weist der Wechselplattformträger ein Wechselplattformträger-Unterteil und ein Wechselplattformträger-Oberteil auf, wobei zumindest ein Teil des Temperiersystems in dem Wechselplattformträger-Oberteil, bevorzugt an dessen Oberseite, vorhanden ist und die Andruckvorrichtung, bevorzugt ein elastisches Element, zwischen Wechselplattformträger-Unterteil und Wechselplattformträger-Oberteil angeordnet ist. Durch diese Ausgestaltung wird sichergestellt, dass das Anliegen des Temperiersystems an der Wechselplattform nicht durch Teile der Andruckvorrichtung behindert wird. Zudem muss die Andruckvorrichtung nicht notwendigerweise an dem Temperiersystem ansetzen. Es reicht, wenn das Wechselplattformträger-Oberteil zusammen mit dem auf dessen Oberseite angeordneten Temperiersystem gegen die Wechselplattform gedrückt wird. Dadurch ist es möglich, einen Wärmeübergang zwischen Temperiersystem und Andruckvorrichtung zu vermeiden, beispielsweise indem zwischen Andruckvorrichtung und Temperiersystem eine thermische Isolation, die dann in dem Wechselplattformträger-Oberteil untergebracht ist, vorhanden ist.

In einer besonderen Ausgestaltung weist zumindest ein Teil des Temperiersystems eine flexible Gestalt auf, bevorzugt eine Mehrzahl von Segmenten, die flexibel untereinander verbunden sind. Wenn zumindest ein Teil des Temperiersystems eine flexible Gestalt aufweist, dann ist dieser Teil in der Lage, sich an eine nicht-ebene Unterseite einer Wechselplattform anzupassen. Beispielsweise könnte das Temperiersystem aus einer Mehrzahl von flexibel miteinander verbundenen Segmenten bestehen, die in Vertiefungen an der Unterseite der Wechselplattform gedrückt werden. Hierdurch kann ein verbesserter Kontakt zur Unterseite einer Wechselplattform hergestellt werden und der Wärmeübertrag verbessert werden.

Weiter bevorzugt weist das Temperiersystem eine Fläche auf, die so gestaltet ist, dass sie parallel zu der zum Wechselplattformträger weisenden Oberfläche der Wechselplattform ist, wenn letztere in der Spannvorrichtung eingespannt ist. Insbesondere, wenn die Wechselplattform eine ebene Gestalt hat, sollte das Temperiersystem, das bevorzugt zumindest teilweise an der zur Wechselplattform weisenden Oberfläche des Wechselplattformträgers angeordnet ist, bevorzugt so gestaltet sein, dass es an seiner zur Wechseiplattform weisenden Oberfläche ebenfalls eben ist und an der Wechselplattform anliegen kann. Je größer der Anteil der Fläche ist, der an der Wechselplattform anliegt, desto besser ist der Wärmeübertrag. Daher sollte der an der Wechselplattform anliegende Anteil der zur Wechselplattform hinweisenden Fläche des Temperiersystems mindestens 50%, bevorzugt mindestens 60%, besonders bevorzugt mindestens 80% betragen.

Bevorzugt weist das Temperiersystem mindestens ein Heizelement, insbesondere eine Heizpatrone, auf, da es bei den meisten generativen Schichtbauverfahren darauf ankommt, Wärme für den Bauvorgang über die Bauunterlage bereitzustellen, um eine möglichst homogene Temperaturverteilung innerhalb des herzustellenden Objekts und des dieses umgebenden Aufbaumaterials während des Herstellvorgangs zu erzielen.

Durch eine lösbare Befestigung des Temperiersystems an dem Wechselplattformträger ist das Temperiersystem auf einfache Weise austauschbar. Aufgrund des erfindungsgemäßen Vorhandenseins einer Andruckvorrichtung ist dennoch, trotz der leichten Austauschbarkeit des Temperiersystems, für einen guten Wärmeübergang zu einer eingespannten Wechselplattform gesorgt.

Eine erfindungsgemäße generative Schichtbauvorrichtung, die ausgelegt ist zum Herstellen mindestens eines dreidimensionalen Objekts durch schichtweises Verfestigen eines pulverförmigen Aufbaumaterials an den dem Objekt entsprechenden Stellen in den jeweiligen Schichten auf einer Wechselplattform, weist einen höhenverfahrbaren, insbesondere einen im Wesentlichen senkrecht zu den Schichten verfahrbaren, Träger auf, auf dem ein erfindungsgemäßer Wechselplattformträger angebracht ist oder in den ein erfindungsgemäßer Wechselplattformträger integriert ist.

Mittels einer erfindungsgemäßen generativen Schichtbauvorrichtung kann gleichzeitig eine hohe Platziergenauigkeit einer Wechselplattform innerhalb einer generativen Schichtbauvorrichtung sowie ein optimierter Wärmeenergieübergang zwischen einem Träger in der Schichtbauvorrichtung und dem Objekt sichergestellt werden. Dadurch kann z.B. während eines Herstellvorgangs des Objekts die Temperatur innerhalb des Objekts und des dieses umgebenden Aufbaumaterials besser kontrolliert werden, was zu einer besseren Reproduzierbarkeit der Eigenschaften von herzustellenden Objekten führt. Damit kann insbesondere die Ortsgenauigkeit hergestellter Objekte besonders gut und effizient gewährleistet werden.

Weitere Merkmale und Zweckmäßigkeiten der Erfindung ergeben sich aus der Beschreibung von Ausführungsbeispielen und anhand der beigefügten Zeichnungen. Von den Figuren zeigen:
- Fig. 1: eine schematische, teilweise im Schnitt dargestellte Ansicht einer Vorrichtung zum generativen Herstellen eines dreidimensionalen Objekts gemäß einer Ausführungsform der Erfindung und
- Fig. 2: eine schematische Darstellung einer möglichen Ausführungsform eines erfindungsgemäßen Wechselplattformträgers, wobei auch die Wechselwirkung mit einer Wechselplattform veranschaulicht ist.

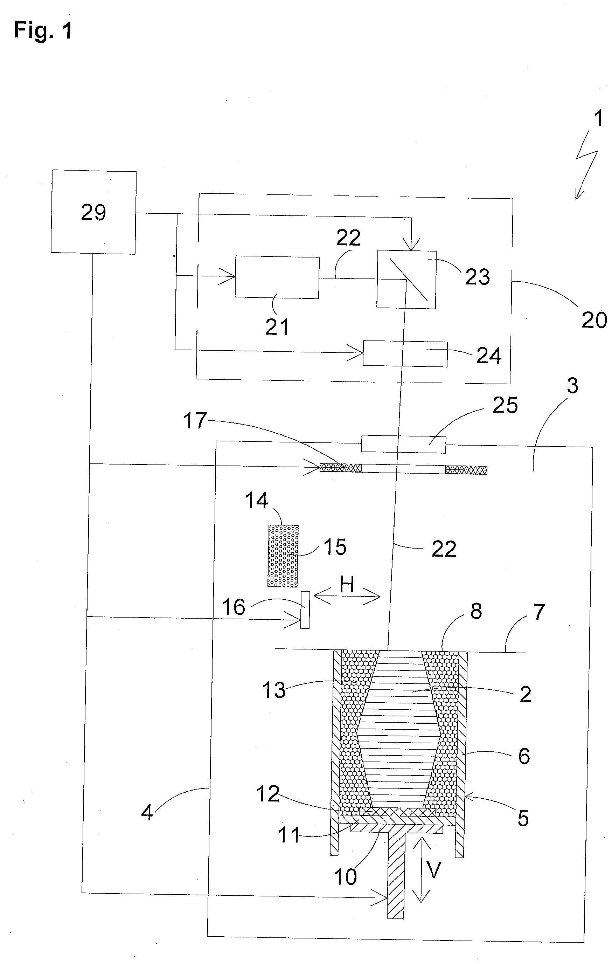

Für eine Beschreibung der Erfindung soll zunächst nachfolgend am Beispiel einer Lasersinter- oder -schmelzvorrichtung eine erfindungsgemäße generative Schichtbauvorrichtung unter Bezugnahme auf Fig. 1 beschrieben werden. Es sei an dieser Stelle vermerkt, dass in der vorliegenden Anmeldung der Begriff "Anzahl" stets im Sinne von "ein oder mehrere" zu verstehen ist. Ferner sei bemerkt, dass mittels einer erfindungsgemäßen generativen Schichtbauvorrichtung nicht nur ein Objekt, sondern auch mehrere Objekte gleichzeitig hergestellt werden können, auch in solchen Fällen, in denen in der nachfolgenden Beschreibung nur von einem Objekt die Rede ist.

Zum Aufbauen eines Objekts 2 enthält die Lasersinter- oder Laserschmelzvorrichtung 1 eine Prozesskammer oder Baukammer 3 mit einer Kammerwandung 4.

In der Prozesskammer 3 ist ein nach oben offener Baubehälter 5 mit einer Behälterwandung 6 angeordnet. Durch die obere Öffnung des Baubehälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Baubehälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 ausgebildet sein, Auf der Grundplatte 11 ist eine Bauunterlage 12 angebracht, auf der das Objekt 2 aufgebaut wird. Bei der vorliegenden Ausführungsform setzt sich die Bauunterlage 12 im Wesentlichen aus dem erfindungsgemäßen Wechselplattformträger und einer darauf angebrachten Wechselplattform zusammen, wobei das Objekt 2 auf der Wechselplattform aufgebaut wird.

Es sei noch bemerkt, dass in Fig. 1 das in dem Behälter 5 auf der Bauunterlage 12 zu bildende Objekt 2 unterhalb der Arbeitsebene 7 in einem Zwischenzustand mit mehreren verfestigten Schichten, umgeben von unverfestigt gebliebenem Aufbaumaterial 13 gezeigt ist.

Die Lasersinter- oder -schmelzvorrichtung 1 enthält weiterhin einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Weiter enthält die Lasersintervorrichtung 1 eine Steuereinrichtung 29, über die die einzelnen Bestandteile der Vorrichtung 1 in koordinierter Weise zum Durchführen des Bauprozesses gesteuert werden. Alternativ kann die Steuereinrichtung auch teilweise oder ganz außerhalb der Vorrichtung angebracht sein. Die Steuereinrichtung kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinrichtung geladen werden kann.

Im Betrieb wird durch die Steuereinrichtung 29 der Träger 10 Schicht für Schicht abgesenkt, der Beschichter 16 zum Auftrag einer neuen Pulverschicht angesteuert und die Umlenkvorrichtung 23 und gegebenenfalls auch der Laser 21 und/oder die Fokussiervorrichtung 24 angesteuert zum Verfestigen der jeweiligen Schicht an den dem jeweiligen Objekt entsprechenden Stellen mittels des Lasers durch Abtasten dieser Stellen mit dem Laser.

Auch wenn in Fig. 1 als Beispiel einer generativen Schichtbauvorrichtung eine Lasersinter- bzw. Laserschmelzvorrichtung beschrieben wurde, ist die Erfindung nicht auf das Lasersintern oder Laserschmelzen eingeschränkt. Sie kann im Zusammenhang mit beliebigen Verfahren zum generativen Herstellen eines dreidimensionalen Objektes durch schichtweises Aufbringen und selektives Verfestigen eines Aufbaumaterials angewendet werden. Hier seien lediglich beispielhaft das Laserschmelzen, LLM (Ausschneiden aus Folien und Fügen), FLM (Aufbringen eines thermoplastischen Materials aus einer Düse), 3D-Drucken, Maskensinterverfahren und stereolithografische Verfahren genannt.

Eine Belichtungsvorrichtung kann beispielsweise einen oder mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Allgemein kann an Stelle eines Lasers jede Einrichtung verwendet werden, mit der Energie als elektromagnetische Strahlung oder Teilchenstrahlung selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen.

Schließlich sei noch erwähnt, dass der in Fig. 1 gezeigte spezifische Aufbau der Lasersinter- oder -schmelzvorrichtung nur beispielhaft ist und natürlich auch abgewandelt werden kann.

Als Aufbaumaterial können verschiedene Materialien verwendet werden, vorzugsweise Pulver, insbesondere Metallpulver, aber auch Kunststoffpulver, Keramikpulver oder Sand, wobei auch die Verwendung von gefüllten oder gemischten Pulvern möglich ist. Insbesondere in der Stereolithographie kommen Photopolymere zum Einsatz.

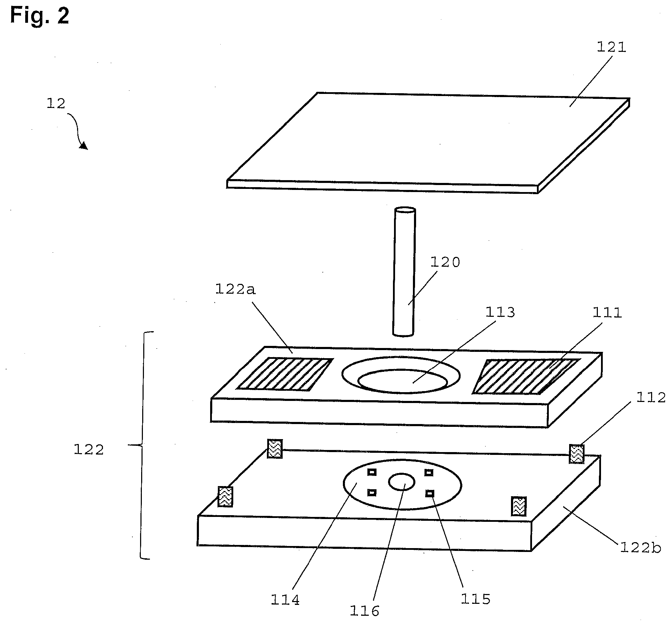

Fig. 2 zeigt einen schematisierten Aufbau eines erfindungsgemäßen Wechselplattformträgers 122, der zusammen mit einer Wechselplattform 121 als in Fig. 1 gezeigte Bauunterlage 12 dient. Zu beachten ist hierbei, dass nach Fertigstellung des Objekts nur die Wechselplattform 121 zusammen mit dem Objekt dem Baubehälter entnommen wird zum Abtrennen des Objekts von der Wechselplattform. Daher wird die Plattform 121, deren bestimmungsgemäßer Gebrauch im Anbringen und Ablösen von dem Wechselplattformträger 122 liegt, als Wechselplattform bezeichnet.

In der beispielhaft dargestellten Ausführung der Fig. 2 besteht der Wechselplattformträger 122 aus einem Wechselplattformträger-Unterteil 122b und einem Wechselplattformträger-Oberteil 122a. Es sei angemerkt, dass in Fig. 2 das Wechselplattformträger-Oberteil 122a und das Wechselplattformträger-Unterteil 122b getrennt voneinander gezeigt sind, bei Benutzung die beiden Komponenten jedoch stets miteinander verbunden sind, indem die Oberseiten der auf der Oberseite des Wechselplattformträger-Unterteils 122b angebrachten Federelemente 112 mit der Unterseite des Wechselplattformträger-Oberteils 122a verbunden sind.

Man erkennt in Fig. 2 weiterhin eine Koppelstange 120, welche bei Benutzung an der Unterseite der Wechselplattform 121 befestigt ist und im Regelfall zusammen mit dieser aus der generativen Schichtbauvorrichtung entnommen wird. Wiederum ist aus Gründen der besseren Übersichtlichkeit die Koppelstange 120 getrennt von der Wechselplattform 121 gezeigt.

Das Wechselplattformträger-Unterteil 122b weist auf seiner Oberseite einen Anbringungsbereich 114 auf, welcher der Positionierung und Halterung der Wechselplattform 121 mit daran angebrachter Koppelstange 120 dient. Insbesondere wird die Wechselplattform 121 mit daran angebrachter Koppelstange 120 bei Benutzung mit dem unteren Ende der Koppelstange 120 in eine Eingriffsausnehmung 116 in dem Anbringungsbereich 114 eingeführt und dort verrastet und/oder kraftschlüssig gehalten, wodurch die Wechselplattform 121 in dem Wechselplattformträger 122 eingespannt ist.

An dem Wechselplattformträger 122 bilden Referenzelemente 115 zusammen mit der Eingriffsausnehmung 116 und einem in ihr befindlichen nicht gezeigten Haltemechanismus ein Spannsystem zum Festlegen einer Position der Wechselplattform 121 bezüglich des Wechselplattformträgers 122. Wie der Haltemechanismus im Detail aussieht, wird hier nicht weiter detailliert beschrieben, da dies dem Fachmann hinreichend bekannt ist und für den Gedanken der vorliegenden Erfindung nicht von Belang ist. Es sei hier lediglich erwähnt, dass die Wechselwirkung zwischen der Koppelstange 120 und der Eingriffsausnehmung 116 entsprechend irgendeinem im Stand der Technik bekannten Referenzspannsystem bzw. Nullpunkt-Spannsystem erfolgen kann. In Fig. 2 sind entsprechend Referenzelemente 115 zur positionsgenauen Festlegung der Wechselplattform 121 bezüglich des Wechselplattformträgers 122 lediglich schematisch dargestellt. Solche Referenzelemente 115 dienen der positionsgenauen Festlegung der Wechselplattform 121 in der XY-Ebene (parallel zur Ebene der Wechselplattform 121) und/oder senkrecht zu dieser Ebene. Es sei angemerkt, dass natürlich eine Wechselplattform 121 auf ihrer Unterseite komplementäre Gegenelemente aufweisen muss, die mit den Referenzelementen 115 bei der Positionierung zusammenwirken. In der lediglich schematischen Fig. 2 sind diese Gegenelemente nicht gezeigt. Mittels eines Referenzspannsystems bzw. Nullpunkt-Spannsystems, welches hier erfindungsgemäß angewendet werden kann, lässt sich die Position eines vorbestimmten Ortes in der Wechselplattform (die auch als "Palette" bezeichnet wird) relativ zu einem Ort in dem Wechselplattformträger je nach System mit einer Unsicherheit kleiner/gleich 30 µm, kleiner/gleich 25 µm oder kleiner/gleich 20 µm festlegen und im Idealfall mit einer Genauigkeit von 2 bis 5 µm festlegen.

Die genaue Anzahl und Ausgestaltung der Referenzelemente ist im Stand der Technik bekannt. Als Hersteller von Referenzspannsystemen, wie sie mittels der Koppelstange 120 und dem Anbringungsbereich 114 realisiert werden können, seien hier beispielhaft die Firma System 3R Schweiz AG, Flawil, die Firma STARK Spannsysteme GmbH in Götzis, Österreich, sowie die Firma EROWA LTD in Büron, Schweiz, genannt. Die Ausgestaltung der Koppelung zwischen Wechselplattform und Wechselplattformträger, insbesondere der Koppelstange ist ebenfalls im Stand der Technik bekannt und ist abhängig vom verwendeten Spannsystem.

Das Wechselplattformträger-Oberteil 122a weist eine zentrale Öffnung 113 auf, welche so bemessen ist, dass durch diese Öffnung hindurch die Koppelstange 120 und die Gegenelemente auf der Unterseite der Wechselplattform 121 mit dem Anbringungsbereich 114 auf der Oberseite des Wechselplattformträger-Unterteils 122b zusammenwirken können.

Weiterhin erkennt man auf der Oberseite des Wechselplattformträger-Oberteils 122a schematisch dargestellte Temperiereinheiten 111 als Temperiersystem. Bei diesen Temperiereinheiten kann es sich beispielsweise um Heizvorrichtungen handeln, die auf verschiedenste Art und Weise implementiert sein können. Beispielsweise kann eine Temperiereinheit einen oder mehrere Heizleiter aufweisen, ebenso gut ist aber auch eine andersartige Realisierung einer Heizvorrichtung möglich, beispielsweise indem eine Temperiereinheit 111 von einem temperierten fluiden Medium durchflossene Rohrleitungen aufweist. Ebenso ist es möglich, eine Temperiereinheit alternativ oder zusätzlich mit einer Kühlfunktion zu versehen. Beispielsweise könnte man ein kühlendes Medium (z.B. Wasser) durch Rohrleitungen in einer Temperiereinheit 111 strömen lassen. Wenn in Fig. 2 zwei Temperiereinheiten 111 gezeigt sind, so ist dies ebenfalls nur beispielhaft. Es kann im Rahmen der Erfindung auch eine andere Anzahl von Temperiereinheiten vorhanden sein.

Ein Einsetzen einer Wechselplattform 121 in den Wechselplattformträger 122 vor der Durchführung des Herstellungsvorgangs einer Anzahl von Objekten in dem Behälter 5 geht beispielsweise wie folgt vonstatten:
Die an der Wechselplattform 121 angebrachte Koppelstange 120 wird durch die zentrale Öffnung 113 in dem Wechselplattformträger-Oberteil 122a hindurch in die Eingriffsausnehmung 116 in dem Anbringungsbereich 114 auf der Oberseite des Wechselplattformträger-Unterteils 122b gesteckt. Die positionsgenaue Ausrichtung der Wechselplattform 121 zu dem Wechselplattformträger-Unterteil 122b erfolgt dabei durch die Wechselwirkung der Referenzelemente 115 auf dem Wechselplattformträger-Unterteil 122b mit nicht dargestellten Komplementärelementen an der Unterseite der Wechselplattform 121. Bei dieser Ausführungsform werden durch das Einsetzen der Koppelstange 120 in die Eingriffsausnehmung 116 die Federelemente 112, welche das Wechselplattformträger-Oberteil 122a mit dem Wechselplattformträger-Unterteil 122b verbinden, komprimiert. Wenn das untere Ende der Koppelstange in der Eingriffsausnehmung 116 gehalten (fixiert) wird und entsprechend die Wechselplattform 121 in dem Wechselplattformträger 122 eingespannt ist, ist die Wechselplattform 121 ortsgenau bezüglich des Wechselplattformträgers 122 positioniert, und gleichzeitig üben die komprimierten Federelemente 112 von unten eine Federkraft auf das Wechselplattformträger-Oberteil 122a aus, so dass dieses zusammen mit der Anzahl von Temperiereinheiten 111 auf seiner Oberseite gegen die Unterseite der Wechselplattform 121 gedrückt wird. Dadurch ist für einen hervorragenden Wärmeübergang zwischen den Temperiereinheiten 111 und der Wechselplattform 121 gesorgt. Da hierbei die als Andruckvorrichtung wirkenden Federelemente 112 vollkommen unabhängig davon wirken, wie die Koppelstange 120 in dem Wechselwirkungsbereich 114 gehalten und positioniert wird, entsteht insbesondere kein Spalt zwischen der Wechselplattform 121 und den Temperiereinheiten 111 auf der Oberseite des Wechselplattformträgers 122.

Für einen guten Wärmeübergang sollte bevorzugt die zur Wechselplattform hin zeigende Oberfläche der Temperiereinheiten die gleiche räumliche Gestalt aufweisen wie die Unterseite einer Wechselplattform. Im Beispiel der Fig. 2 sollte also die Oberfläche der Temperiereinheiten 111 möglichst eben sein. Hier soll bemerkt werden, dass die vorliegende Erfindung unter dem Begriff "Temperiereinheit" eine Vorrichtung versteht, welche dazu ausgelegt ist, an ihre Umgebung Wärme abzugeben bzw. von ihrer Umgebung Wärme abzuführen. Neben den bereits erwähnten Heizelementen wie Heizleitern oder fluiddurchströmten Rohrleitungen ist darunter beispielsweise auch eine Heizpatrone zu verstehen, also ein Heizleiter in einer Metallpatrone als Gehäuse. Für den Fall, dass die obere Oberfläche des Wechselplattformträgers als Gehäuse für eine Heizvorrichtung dient, dass also z.B. ein Heizleiter in den Wechselplattformträger integriert ist, z. B. indem Rohrleitungen nahe der oberen Oberfläche des Wechselplattformträgers für eine Temperierung verlegt sind, wäre jener Abschnitt des Wechselplattformträgers, der der Temperierung dient, ebenfalls als erfindungsgemäße Temperiereinheit anzusehen. Im Normalfall wird jedoch die Temperiereinheit getrennt von dem Wechselplattformträger realisiert sein.

Der in Fig. 2 gezeigte Aufbau ist lediglich ein Ausführungsbeispiel der Erfindung. Zahlreiche Abwandlungen gegenüber diesem Ausführungsbeispiel sind denkbar, die auch untereinander kombinierbar sind, sofern dies nicht zu Widersprüchen führt.

Zum Einen muss der Wechselplattformträger nicht in ein Oberteil und Unterteil unterteilt sein. Denkbar wäre es auch, dass die Federelemente 112 zwischen dem Temperiersystem, insbesondere einer Temperiereinheit, und dem Wechselplattformträger 122 angebracht sind, so dass bei einer Fixierung der Koppelstange 120 in dem Wechselplattformträger 122 die Federn 112 komprimiert sind und als Andruckelement für das Temperiersystem bzw. zumindest eines Teils desselben gegen die Unterseite der Wechselplattform 121 wirken.

Weiterhin muss es sich bei der Andruckvorrichtung nicht notwendigerweise um ein oder mehrere Federelemente 112 handeln. Abgesehen davon, dass alternativ zu Federn auch Elemente aus einem Elastomer zum Einsatz kommen können, kann die Erfindung auch so implementiert werden, dass in dem Zustand, in dem die Wechselplattform 121 in dem Wechselplattformträger 122 eingespannt ist, zumindest ein Teil des Temperiersystems pneumatisch oder hydraulisch gegen die Wechselplattform gedrückt wird. Beispielsweise kann mit dem Fixieren der Koppelstange 120 in dem Wechselplattformträger 122 ein Schalter betätigt werden, der eine pneumatische oder hydraulische Vorrichtung aktiviert. Mit dem Entfernen der Wechselplattform von dem Wechselplattformträger würde dann beispielsweise der hydraulische oder pneumatische Andruck wieder deaktiviert. Alternativ oder zusätzlich könnte die Andruckvorrichtung auch elektromagnetisch oder piezoelektrisch aktiviert und/oder deaktiviert werden. Im Extremfall wäre es sogar möglich, nach dem Fixieren der Koppelstange 120 in dem Wechselplattformträger 122 das Temperiersystem 111 oder den das Temperiersystem enthaltenden Abschnitt des Wechselplattformträgers 122 mittels Schrauben an der Wechselplattform 121 zu befestigen. Die Andruckvorrichtung bestünde dann aus den entsprechenden Schrauben.

Auch wenn in Fig. 2 eine ebene Wechselplattform gezeigt ist, so gibt es auch Anwendungen, bei denen die Wechselplattform eine nicht-ebene Gestalt aufweist. Beispielsweise wird oftmals nicht das gesamte Objekt mittels eines generativen Schichtbauverfahrens hergestellt, sondern ein Teil des Objekts wird mittels eines anderen Verfahrens vorgefertigt und lediglich weitere Abschnitte werden durch ein generatives Schichtbauverfahren dem bereits vorgefertigten Teil des Objekts(der sog. Preform) hinzugefügt. Die Preform, beispielsweise ein Abschnitt eines Spritzgussformeinsatzes, ist dann als Wechselplattform anzusehen, die auf einem Wechselplattformträger angeordnet ist. Hier wäre es günstig, wenn die Oberfläche des Wechselplattformträgers an die zu diesem weisende Oberfläche der Preform angepasst ist und/oder das Temperiersystem für einen guten Wärmeübergang gegen diese nicht-ebene Oberfläche der Preform gedrückt wird.

Weiterhin kann die Andruckvorrichtung auch in das Temperiersystem integriert sein, z.B. indem das Temperiersystem ein elastisches Element aufweist. Beispielsweise könnte ein Heizleiter eine elastische Ummantelung aufweisen, welche beim Einspannen einer Wechselplattform in dem Wechselplattformträger komprimiert wird und für einen Andruck an der Wechselplattform sorgt.

Für den Fall, dass die Wechselplattform 121 an ihrer Unterseite, die zum Wechselplattformträger hinweist, eine nicht-glatte (z.B. eine profilierte) Oberfläche aufweist, beispielsweise Rillen, kann zumindest ein Teil des Temperiersystems so ausgelegt sein, dass ein Zusammenwirken mit dieser nicht-glatten Oberfläche möglich ist. Beispielsweise könnte eine Temperiereinheit aus Heizstäben bestehen, welche flexibel miteinander verbunden sind und beim Einspannen der Wechselplattform 121 in Rillen an der Unterseite der Wechselplattform gedrückt werden. Die Segmentierung und flexible Gestaltung des Temperiersystems bzw. zumindest eines Teils desselben kann also so ausgelegt sein, dass sich das Temperiersystem an das Oberflächenprofil der Wechselplattform anschmiegt.

Es sei weiterhin bemerkt, das auf einem erfindungsgemäßen Wechselplattformträger auch mehrere Wechselplattformen anordbar sein können, sofern zumindest bei einer von diesen ein Andrücken eines Temperiersystems mittels einer Andruckvorrichtung, wenn die Wechselplattform eingespannt ist, realisiert ist. Weiterhin ist es auch denkbar, dass in einer erfindungsgemäßen Schichtbauvorrichtung eine Mehrzahl von erfindungsgemäßen Wechselplattformträgern auf der Grundplatte 11 angebracht ist.

Ein erfindungsgemäßer Wechselplattformträger muss nicht zwingend auf der Grundplatte 11 angebracht sein. Vielmehr kann er auch als integraler Bestandteil der Grundplatte 11 ausgebildet sein, welche ihrerseits wiederum optional als integraler Bestandteil des Trägers 10 ausgebildet sein kann.

## Patentansprüche

1. Wechselplattformträger für eine generative Schichtbauvorrichtung, die ausgelegt ist zum Herstellen mindestens eines dreidimensionalen Objekts durch schichtweises Verfestigen eines pulverförmigen Aufbaumaterials an den dem mindestens einen Objekt entsprechenden Stellen in den jeweiligen Schichten auf einer Wechselplattform (121), wobei der Wechselplattformträger aufweist:
eine Spannvorrichtung (114, 115, 116) zum lösbaren Festlegen einer Position der Wechselplattform (121) bezüglich der Position des Wechselplattformträgers;
ein Temperiersystem (111), das ausgelegt ist, zumindest einem Teil seiner Umgebung Wärmeenergie zuzuführen und/oder von zumindest einem Teil seiner Umgebung Wärmeenergie abzuführen;
eine Andruckvorrichtung (112), die geeignet ist, zumindest einen Teil des Temperiersystems (111) unabhängig von der Spannvorrichtung (114, 115, 116) gegen eine Wechselplattform (121) zu drücken, wenn diese in der Spannvorrichtung (114, 115, 116) eingespannt ist.

2. Wechselplattformträger nach Anspruch 1, bei dem das Temperiersystem (111) eine Anzahl von Temperiereinheiten aufweist, von denen jede geeignet ist, zumindest einem Teil ihrer Umgebung Wärmeenergie zuzuführen und/oder von zumindest einem Teil ihrer Umgebung Wärmeenergie abzuführen.

3. Wechselplattformträger nach Anspruch 1 oder 2, bei dem die Spannvorrichtung (115, 116) geeignet ist, in einer Ebene parallel zu den Schichten auf der Wechselplattform (121) eine Stellenposition einer vorgegebenen Stelle in der Wechselplattform in Übereinstimmung zu bringen mit einer Trägerposition einer vorgegebenen Stelle in dem Wechselplattformträger (122) mit einer Positionsunsicherheit, die in einer Richtung in der Ebene kleiner/gleich 30, bevorzugt kleiner/gleich 25, besonders bevorzugt kleiner/gleich 20 µm ist.

4. Wechselplattformträger nach einem der vorhergehenden Ansprüche, bei dem die Spannvorrichtung (115, 116, 120) und die Andruckvorrichtung (112) so ausgelegt sind, dass beim Einspannen einer Wechselplattform (121) zumindest ein Teil des Temperiersystems (111) durch die Andruckvorrichtung (112) gegen die Wechselplattform (121) gedrückt wird.

5. Wechselplattformträger nach einem der vorhergehenden Ansprüche bei dem die Andruckvorrichtung (112) Bestandteil des Temperiersystems (111) ist.

6. Wechselplattformträger nach einem der vorhergehenden Ansprüche, bei dem es sich bei der Andruckvorrichtung (112) um ein elastisches Element handelt.

7. Wechselplattformträger nach Anspruch 6, bei dem es sich bei dem elastischen Element um eine einzelne Feder oder eine Mehrzahl von Federn handelt, welche bevorzugt so angebracht sind, dass sie zumindest einen Teil des Temperiersystems (111) senkrecht zur zum Wechselplattformträger weisenden Oberfläche der Wechselplattform gegen die Wechselplattform (121) drücken, wenn letztere in der Spannvorrichtung (115, 116) eingespannt ist.

8. Wechselplattformträger nach einem der Ansprüche 6 bis 7, wobei die Spannvorrichtung (115, 116, 120) geeignet ist, eine Verbindung zwischen einer Wechselplattform (121) und dem Wechselplattformträger (122) dergestalt zu schaffen, dass im verbundenen Zustand das elastische Element komprimiert ist.

9. Wechselplattformträger nach einem der Ansprüche 1 bis 5, bei dem es sich bei der Andruckvorrichtung (112) um eine pneumatisch, hydraulisch, elektromagnetisch oder piezoelektrisch betätigte Vorrichtung handelt.

10. Wechselplattformträger nach einem der vorhergehenden Ansprüche mit einem Wechselplattformträger-Unterteil (122b) und einem Wechselplattformträger-Oberteil (122a), wobei zumindest ein Teil des Temperiersystems (111) in dem Wechselplattformträger-Oberteil (122a), bevorzugt an dessen Oberseite, vorhanden ist und die Andruckvorrichtung (112), bevorzugt ein elastisches Element, zwischen Wechselplattformträger-Unterteil (122b) und Wechselplattformträger-Oberteil (122a) angeordnet ist.

11. Wechselplattformträger nach einem der vorhergehenden Ansprüche, bei dem zumindest ein Teil des Temperiersystems (111) eine flexible Gestalt aufweist, bevorzugt eine Mehrzahl von Segmenten, die flexibel untereinander verbunden sind.

12. Wechselplattformträger nach einem der vorhergehenden Ansprüche, bei dem das Temperiersystem (111) eine Fläche aufweist, die so gestaltet ist, dass sie parallel zu der zum Wechselplattformträger weisenden Oberfläche der Wechselplattform ist, wenn letztere in der Spannvorrichtung (115, 116) eingespannt ist.

13. Wechselplattformträger nach einem der vorhergehenden Ansprüche, bei dem das Temperiersystem (111) mindestens ein Heizelement, insbesondere eine Heizpatrone, aufweist.

14. Wechselplattformträger nach einem der vorhergehenden Ansprüche, bei dem das Temperiersystem (111) lösbar an dem Wechselplattformträger (122) befestigt ist.

15. Generative Schichtbauvorrichtung, die ausgelegt ist zum Herstellen mindestens eines dreidimensionalen Objekts durch schichtweises Verfestigen eines pulverförmigen Aufbaumaterials an den dem Objekt entsprechenden Stellen in den jeweiligen Schichten auf einer Wechselplattform (121), wobei die generative Schichtbauvorrichtung einen höhenverfahrbaren, insbesondere einen im Wesentlichen senkrecht zu den Schichten verfahrbaren, Träger (10, 11) aufweist, auf dem ein Wechselplattformträger (122) nach einem der vorangehenden Ansprüche angebracht oder in den ein Wechselplattformträger (122) nach einem der vorangehenden Ansprüche integriert ist.

## Claims

1. A swap platform support for a layerwise additive manufacturing device that is configured for manufacturing at least one three-dimensional object by a layer-wise solidification of a building material in powder form at the positions in the corresponding layers on a swap platform (121) that correspond to the at least one object, the swap platform support comprising:
a clamping device (114, 115, 116) for releasably fixing a position of the swap platform (121) with respect to the position of the swap platform support;
a tempering system (111) configured to supply heat energy to at least a part of its surrounding and/or to remove heat energy from at least a part of its surrounding;
a pressing device (112) capable of pressing independently from the clamping device (114, 115, 116) at least a part of the tempering system (111) against a swap platform (121) when the same is clamped in the clamping device (114, 115, 116).

2. The swap platform support of claim 1, in which the tempering system (111) comprises a number of tempering units, each of which is capable of supplying heat energy to at least a part of its surrounding and/or to remove heat energy from at least a part of its surrounding.

3. The swap platform support of claim 1 or 2, in which the clamping device (115, 116) is capable of adjusting a position location of a predetermined position in the swap platform with a support location of a predetermined position in the swap platform support (122) in a plane in parallel to the layers on the swap platform (121) with a position inaccuracy that is smaller than/equal to 30, preferably smaller than/equal to 25, further preferably smaller than/equal to 20 µm in a direction within the plane.

4. The swap platform support of one of the preceding claims, in which the clamping device (115, 116, 120) and the pressing device (112) are configured such that when a swap platform (121) is mounted, at least a portion of the tempering system (111) is pressed against the swap platform (121) by the pressing device (112).

5. The swap platform support of one of the preceding claims, in which the pressing device (112) is a component of the tempering system (111).

6. The swap platform support of one of the preceding claims, in which the pressing device (112) is an elastic element.

7. The swap platform support of claim 6. in which the elastic element is a single spring or a plurality of springs, which preferably are arranged such that they press at least a part of the tempering system (111) against the swap platform (121) perpendicularly to the surface of the swap platform facing the swap platform support, when the swap platform (121) is clamped in the clamping device (115, 116).

8. The swap platform support of one of claims 6 to 7, wherein the clamping device (115, 116, 120) is capable of providing a connection between a swap platform (121) and the swap platform support (122) such that in a connected state the elastic element is compressed.

9. The swap platform support of one of claims 1 to 5, wherein the pressing device (112) is a pneumatically, hydraulically, electromagnetically or piezo-electrically actuated device.

10. The swap platform support of one of the preceding claims having a swap platform support lower part (122b) and a swap platform support upper part (122a), wherein at least a portion of the tempering system (111) is located in the swap platform support upper part (122a), preferably at its top side, and the pressing device (112), preferably an elastic element, is arranged between the swap platform support lower part (122b) and the swap platform support upper part (122a).

11. The swap platform support of one of the preceding claims, in which at least a portion of the tempering system (111) has a flexible design, preferably a plurality of segments that are flexibly connected to one another.

12. The swap platform support of one of the preceding claims, in which the tempering system (111) has a surface designed such as to be in parallel to the surface of the swap platform facing the swap platform support when the swap platform is clamped in the clamping device (115, 116).

13. The swap platform support of one of the preceding claims, in which the tempering system (111) comprises at least one heating element, in particular a heating cartridge.

14. The swap platform support of one of the preceding claims, in which the tempering system (111) is releasably fixed at the swap platform support.

15. A layer-wise additive manufacturing device configured to manufacture at least one three-dimensional object by a layer-wise solidification of a building material in powder form at the positions in the respective layers on a swap platform (121) that correspond to the object, wherein the layer-wise additive manufacturing device comprises a support (10, 11) that is adjustable in height, in particular movable substantially perpendicular to the layers, on which a swap platform support (122) of one of the preceding claims is mounted or into which a swap platform support (122) of one of the preceding claims is integrated.

## Revendications

1. Support de plateforme interchangeable pour un dispositif de construction additive couche par couche, qui est conçu pour fabriquer au moins un objet tridimensionnel par solidification couche par couche d'un matériau constitutif pulvérulent aux emplacements correspondant à au moins un objet dans les couches respectives sur une plateforme interchangeable (121), dans lequel le support de plateforme interchangeable présente :
un dispositif de serrage (114, 115, 116) pour fixer de manière amovible une position de la plateforme interchangeable (121) par rapport à la position du support de plateforme interchangeable ;
un système de thermorégulation (111), qui est conçu pour amener de l'énergie thermique à au moins une partie de son environnement et/ou pour évacuer de l'énergie thermique d'au moins une partie de son environnement ;
un dispositif de pression (112), qui est adapté à presser au moins une partie du système de thermorégulation (111) indépendamment du dispositif de serrage (114, 115, 116) contre une plateforme interchangeable (121), lorsque celle-ci est serrée dans le dispositif de serrage (114, 115, 116).

2. Support de plateforme interchangeable selon la revendication 1, dans lequel le système de thermorégulation (111) présente un certain nombre d'unités de thermorégulation dont chacune est adaptée à amener de l'énergie thermique à au moins une partie de leur environnement et/ou à évacuer de l'énergie thermique d'au moins une partie de leur environnement.

3. Support de plateforme interchangeable selon la revendication 1 ou 2, dans lequel le dispositif de serrage (115, 116) est adapté, dans un plan parallèle aux couches sur la plateforme interchangeable (121), à amener une position d'emplacement d'un emplacement prédéfini dans la plateforme interchangeable en concordance avec une position de support d'un emplacement prédéfini dans le support de plateforme interchangeable (122) avec une incertitude de position qui, dans une direction dans le plan, est inférieure/égale à 30, de préférence inférieure/égale à 25, de manière particulièrement préférée inférieure/égale à 20 µm.

4. Support de plateforme interchangeable selon l'une quelconque des revendications précédentes, dans lequel le dispositif de serrage (115, 116, 120) et le dispositif de pression (112) sont conçus de sorte que, lors du serrage d'une plateforme interchangeable (121), au moins une partie du système de thermorégulation (111) est pressée par le dispositif de pression (112) contre la plateforme interchangeable (121).

5. Support de plateforme interchangeable selon l'une quelconque des revendications précédentes, dans lequel le dispositif de pression (112) fait partie du système de thermorégulation (111).

6. Support de plateforme interchangeable selon l'une quelconque des revendications précédentes, dans lequel le dispositif de pression (112) est un élément élastique.

7. Support de plateforme interchangeable selon la revendication 6, dans lequel l'élément élastique est un ressort individuel ou une pluralité de ressorts, lesquels sont montés de préférence de sorte qu'ils pressent au moins une partie du système de thermorégulation (111) perpendiculairement à la surface, tournée vers le support de plateforme interchangeable, de la plateforme interchangeable contre la plateforme interchangeable (121), lorsque cette derrière est serrée dans le dispositif de serrage (115, 116).

8. Support de plateforme interchangeable selon l'une quelconque des revendications 6 à 7, dans lequel le dispositif de serrage (115, 116, 120) est adapté à établir une liaison entre une plateforme interchangeable (121) et le support de plateforme interchangeable (122), de telle sorte que, dans l'état relié, l'élément élastique est comprimé.

9. Support de plateforme interchangeable selon l'une quelconque des revendications 1 à 5, dans lequel le dispositif de pression (112) est un dispositif actionné de manière pneumatique, hydraulique, électromagnétique ou piézoélectrique.

10. Support de plateforme interchangeable selon l'une quelconque des revendications précédentes avec une partie inférieure de support de plateforme interchangeable (122b) et une partie supérieure de support de plateforme interchangeable (122a), dans lequel au moins une partie du système de thermorégulation (111) est présente dans la partie supérieure de support de plateforme interchangeable (122a), de préférence sur la face supérieure de celle-ci, et le dispositif de pression (112), de préférence un élément élastique, est disposé entre la partie inférieure de support de plateforme interchangeable (122b) et la partie supérieure de support de plateforme interchangeable (122a).

11. Support de plateforme interchangeable selon l'une quelconque des revendications précédentes, dans lequel au moins une partie du système de thermorégulation (111) présente une configuration flexible, de préférence une pluralité de segments qui sont reliés entre eux de manière flexible.

12. Support de plateforme interchangeable selon l'une quelconque des revendications précédentes, dans lequel le système de thermorégulation (111) présente une surface qui est conçue de sorte qu'elle est parallèle à la surface, tournée vers le support de plateforme interchangeable, de la plateforme interchangeable, lorsque cette dernière est serrée dans le dispositif de serrage (115, 116).

13. Support de plateforme interchangeable selon l'une quelconque des revendications précédentes, dans lequel le système de thermorégulation (111) présente au moins un élément chauffant, en particulier une cartouche chauffante.

14. Support de plateforme interchangeable selon l'une quelconque des revendications précédentes, dans lequel le système de thermorégulation (111) est fixé de manière amovible sur le support de plateforme interchangeable (122).

15. Dispositif de construction générative couche par couche, qui est conçu pour fabriquer au moins un objet tridimensionnel par solidification couche par couche d'un matériau constitutif pulvérulent aux emplacements correspondant à l'objet dans les couches respectives sur une plateforme interchangeable (121), dans lequel le dispositif de construction additive couche par couche présente un support (10, 11) mobile en hauteur, en particulier mobile sensiblement perpendiculairement aux couches, sur lequel un support de plateforme interchangeable (122) selon l'une quelconque des revendications précédentes est monté ou dans lequel un support de plateforme interchangeable (122) selon l'une quelconque des revendications précédentes est intégré.
